# DEMANDE DE BREVET EUROPEEN

(11) **EP 0 666 488 A1**
(43) Date de publication de la demande: **09.08.1995**
(21) Numéro de dépôt: 95400180.6
(22) Date de dépôt: 27.01.1995
(51) Int. Cl.: G02B 21/24

(54) **Procédé d'analyse automatique d'éléments en faible concentration sur un support d'objets de faible occurrence et dispositif pour la mise en oeuvre dudit procédé**

(30) Priorité: 04.02.1994 FR 9401263
(71) Demandeur: BIOCOM S.A., F-91942 Les Ulis Cédex (FR)
(72) Inventeur: Bisconte, J. C., F-91640 Briis Sous Forges (FR)
(74) Mandataire: Pernez, Helga

(57) **Abrégé**

La présente invention concerne un procédé d'analyse automatique d'éléments en faible concentration sur un support d'objets de faible occurrence présentant un état de surface contrasté, consistant à éclairer la zone d'observation avec une première source de lumière (4) émettant dans une première plage de longueur d'ondes et une deuxième source (5) émettant dans le spectre d'excitation des objets (23, 32) de faible occurrence, à procéder à la focalisation des moyens d'acquisition d'images et à déclencher après focalisation l'accumulation de photons émis par les objets (23, 32) de faible occurrence illuminés avec une source (4) émettant dans le spectre d'excitation desdits objets (23, 32), caractérisé en ce que l'on procède à une modification de la focalisation des moyens d'acquisition des images jusqu'à la maximalisation du contraste d'une zone (30) dans ladite première plage de longueur d'ondes, ladite zone (30) étant dissociable de la zone d'observation éclairée par la seconde source de lumière.

## Description

La présente invention concerne un procédé d'analyse automatique d'éléments microscopiques en faible concentration sur un support d'objets.

De tels procédés sont en particulier employés pour la mesure des caractéristiques de cellules et bactéries déposées par filtration fixées sur une membrane, ainsi que pour l'analyse de sous-éléments de cellules comme les noyaux ou les chromosomes.

Les objets observés sont de petite dimension, généralement de taille comprise entre 0,5 et 50 microns et nécessitent un grossissement important. L'occurrence des objets à analyser sur le support est par ailleurs faible, ce qui rend une automatisation de l'analyse quasiment indispensable pour des contrôles de routine.

Ces procédés microscopiques, connus sous le nom de cytométrie, mettent en oeuvre une première source de lumière dans le spectre visible et une deuxième source émettant dans le spectre d'excitation des produits de marquage fixés par les objets de faible occurrence à détecter et/ou à analyser.

Le brevet FR2638240 de la demanderesse décrit une platine de fixation de supports porteurs d'échantillons particulièrement adaptée à de telles analyses.

Le but de l'invention décrite dans ce brevet est notamment d'améliorer la focalisation du système d'acquisition d'images, à savoir une caméra à transfert de charge ou un photomultiplicateur. Elle a permis d'obtenir une planéité parfaite du support à analyser, de faciliter la fixation rapide et d'indexer automatiquement d'un ou de plusieurs échantillons, et de rendre possible une recherche automatique de la meilleure focalisation.

L'automatisation de la focalisation met toutefois en oeuvre, dans l'état de la technique, des algorithmes complexes et qui ne permettent pas d'éviter totalement une intervention manuelle par un opérateur vérifiant la focalisation. Par ailleurs, les procédés de l'art antérieur sont perturbés par les zones vides dans lesquelles ne se trouve aucun objet à observer.

Un autre inconvénient des dispositifs et procédés de l'art antérieur est de nécessiter un temps d'adaptation très long, lorsque les objets à observer présentent un faible degré de luminescence, par exemple lorsqu'il s'agit d'objets portant un marqueur fluorescent nécessitant l'emploi de caméra à accumulation de photons. Ces dispositifs sont donc incompatibles avec une automatisation de la focalisation.

Dans l'état de la technique, on a effectué différentes tentatives d'améliorer les procédés d'automatisation de la focalisation. Dans un document japonais JP60026311, on a proposé d'utiliser une image de l'ensemble de la platine, obtenue sous éclairage infra-rouge. Un autre document japonais, le brevet JP3168712, divulgue un procédé consistant à détecter les franges d'interférences formées à la surface de l'objet, ce qui nécessite un traitement de l'image complexe et une haute résolution du système d'automatisation de la focalisation.

L'objet de la présente invention est de remédier à ces inconvénients en proposant un procédé et un dispositif permettant d'automatiser la focalisation, même lorsque le niveau de luminescence est très faible, où lorsque aucun objet n'est présent dans le champs d'observation. Un autre but de l'invention est de proposer un procédé et une installation pour automatiser la focalisation d'un prix réduit et d'une grande fiabilité.

A cet effet, l'invention consiste à employer un support présentant un état de surface contrasté, à éclairer une zone marginale du champ d'observation avec une première source de lumière émettant dans le spectre visible et à procéder à une modification de la focalisation des moyens d'acquisition des images par maximalisation du contraste de ladite zone marginale éclairée par la lumière visible.

Le support est par exemple constitué par une membrane micro poreuse en forme de disque ou intégré dans un support souple. Le système d'acquisition d'image enregistre deux images, à savoir l'image de focalisation provenant d'une zone éclairée par la source de lumière visible, et l'image des objets recherchés provenant de la zone complémentaire de très faible luminosité, l'émission de photons provenant principalement de l'excitation des marqueurs fluorescents. L'analyse d'image permet de déterminer le contraste de la première image, par calcul de la différence entre le niveau entre les pixels ou points élémentaires de l'image dont la luminosité est la plus faible d'une part, et le niveau des pixels dont la luminosité est la plus forte d'autre part.

La focalisation s'effectue par ajustement de la focalisation jusqu'à ce que la position corresponde à la maximalisation du contraste de l'image observée.

La dissociation des deux images peut être réalisée de différentes manières :
- par des moyens optiques, en formant deux plages séparées dans l'espace, par exemple une plage de petite dimension pour la focalisation et une plage correspondant à l'essentiel du champ du bloc optique, pour l'observation des objets, le cas échéant par accumulation de photons ;
- par des moyens électroniques, en séparant temporellement les images en activant alternativement la première source lumineuse et la deuxième source lumineuse. Cette séparation temporelle peut être réalisée par des moyens électriques ou par des moyens mécaniques. Il est par ailleurs envisageable de laisser la deuxième source de lumière active en permanence lorsque le niveau de luminance par épi-fluorescence est faible par rapport au niveau d'éclairage par transmission ;
- par des moyens chromatiques, par l'emploi d'une caméra chromatique, par exemple un ensemble de trois caméras CCD équipées de filtres passe-bande.

Selon une première variante, on éclaire avec la première source de lumière dans le spectre visible une zone marginale, avantageusement comprise entre 3 et 8 % de la surface du champ d'observation, en ce que l'on détermine la focalisation en fonction de la maximalisation de l'écart entre la valeur du pixel de plus faible luminosité et la valeur du pixel de plus forte luminosité.

Selon une deuxième variante, on éclaire le support d'objet alternativement avec la première source de lumière émettant dans le spectre visible et avec la deuxième source de lumière, la focalisation étant réalisée de façon synchrone avec le fonctionnement de la première source de lumière par modification de la focalisation des moyens d'acquisition des images jusqu'à la maximalisation du contraste d'une zone éclairée par la lumière visible.

Avantageusement, on commande l'extinction de la première source de lumière lorsque le contraste de l'image est maximal.

Selon une troisième variante, on éclaire le support d'objet avec une première source de lumière dans le spectre visible, émettant dans une première plage de longueur d'onde différente de la deuxième plage de longueur d'onde de fluorescence des objets observés, les moyens d'acquisition d'images comportant des moyens de séparation des deux plages de longueur d'onde, le procédé consistant à procéder à une modification de la focalisation des moyens d'acquisition des images jusqu'à la maximalisation du contraste de l'image correspondant à la première plage de longueur d'onde.

L'invention concerne également un dispositif comportant une platine sur laquelle est disposée le support portant les objets à analyser, un premier élément d'éclairage constitué par une source de lumière dans le spectre visible et par des moyens de collimation formés par un condenseur et un diaphragme, un deuxième élément d'éclairage et un moyen d'acquisition d'images délivrant un signal électrique à un circuit de traitement de signal et de visualisation des images observées. Le dispositif d'analyse selon l'invention est caractérisé en ce qu'il comporte des moyens pour faire coïncider la zone éclairée par le premier élément d'éclairage avec une zone marginale du champ d'observation, et en ce que le circuit de traitement du signal délivre un signal d'asservissement de la focalisation en fonction du contraste de l'image dans ladite zone éclairée par le premier moyen d'éclairage.

Avantageusement, le dispositif selon l'invention comporte des moyens pour faire coïncider la zone éclairée par le premier élément d'éclairage avec une zone marginale du champ d'observation et donc du capteur CCD afin de décaler la zone éclairée par la lumière visible dans une partie marginale du champ d'observation.

De préférence, la source de lumière visible est décentrée par rapport à la zone d'observation du moyen d'acquisition d'images.

Selon une variante, le dispositif comporte des moyens pour activer alternativement la première source de lumière et la deuxième source de lumière et ce que le circuit de traitement délivre un signal de synchronisation pour l'activation de la focalisation lorsque la première source de lumière est active.

Selon une autre variante, le dispositif comporte un moyen d'acquisition d'image délivrant des signaux chromatiques, la première source de lumière émettant dans une plage de longueur d'onde distincte de la plage de longueur de fluorescence des objets observés, le circuit de traitement générant un premier signal correspondant à l'image dans la plage de longueur d'onde de la première source de lumière, ledit signal constituant le signal d'asservissement de la focalisation fonction du contraste de ladite première image dans ladite zone éclairée par le premier moyen d'éclairage, et un deuxième signal correspondant à l'image des objets observés.

L'invention sera mieux comprise à la lecture de la description qui, faisant référence aux figures annexées où :
- la figure 1 représente un schéma de principe d'un dispositif selon l'invention ;
- la figure 2 représente une vue détaillée de la partie optique du dispositif selon l'invention ;
- la figure 3 représente une vue schématique du champ d'observation.

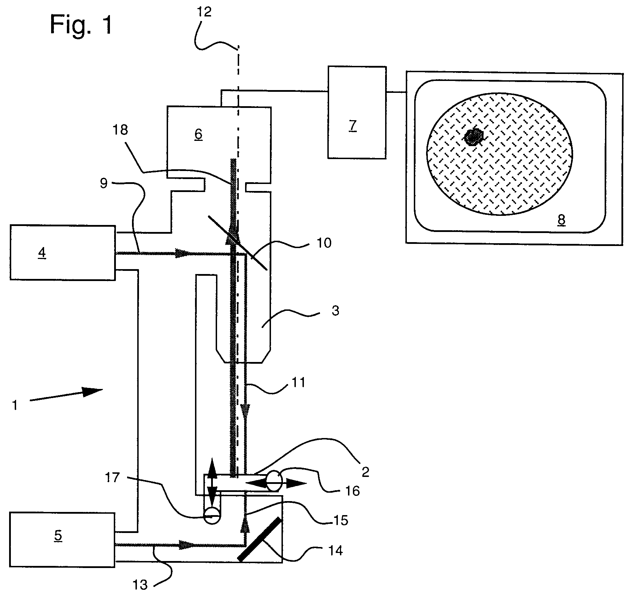

La figure 1 représente un exemple de réalisation d'un dispositif selon l'invention. Il est constitué par un statif (1) supportant une platine porte-échantillon (2), un bloc optique (3), une source de lumière (4) pour l'épi-éclairage de l'échantillon, et une source de lumière visible pour l'éclairage en transmission.

Le bloc optique (6) comporte une caméra à transfert de charges CCD qui délivre un signal électrique à un circuit de traitement (7) dont une sortie est reliée à un moniteur de visualisation (8).

La première source de lumière (4) émet un faisceau (9) dans le spectre d'excitation des marqueurs fluorescents. Le faisceau (9) est réfléchi par un miroir semi-transparent (10) pour former un faisceau d'excitation (11) dirigé selon l'axe optique (12) du bloc optique (3).

Ce faisceau d'épi-fluorescence (11) forme une première plage éclairée centrée sur l'axe optique (12) du bloc optique (3).

La deuxième source de lumière (5) émet un faisceau (13) dans le spectre visible. Ce faisceau (13) est dans l'exemple de réalisation décrit dévié par un miroir (14) pour être dirigé parallèlement à l'axe optique (12). Il éclaire l'échantillon par en-dessous, pour former une seconde plage éclairée décalée par rapport à la plage éclairée par épi-fluorescence.

L'échantillon est porté par un support fixé sur une platine mobile en translation dans le plan horizontal par l'intermédiaire d'une commande motorisée (16) ainsi que dans le plan vertical par l'intermédiaire d'une commande micrométrique motorisée (17). La commande en hauteur (17) permet de positionner l'échantillon dans le plan de focalisation du bloc optique (3).

Le faisceau image (18) reçu par la caméra correspond à l'image d'une première plage sombre (31) présentant des points brillants (32), cette première plage provenant de la fluorescence des objets marqués, et d'une deuxième plage claire avec des points sombres (30), cette deuxième plage correspondant à l'image de la membrane support d'objets éclairée par transmission (5).

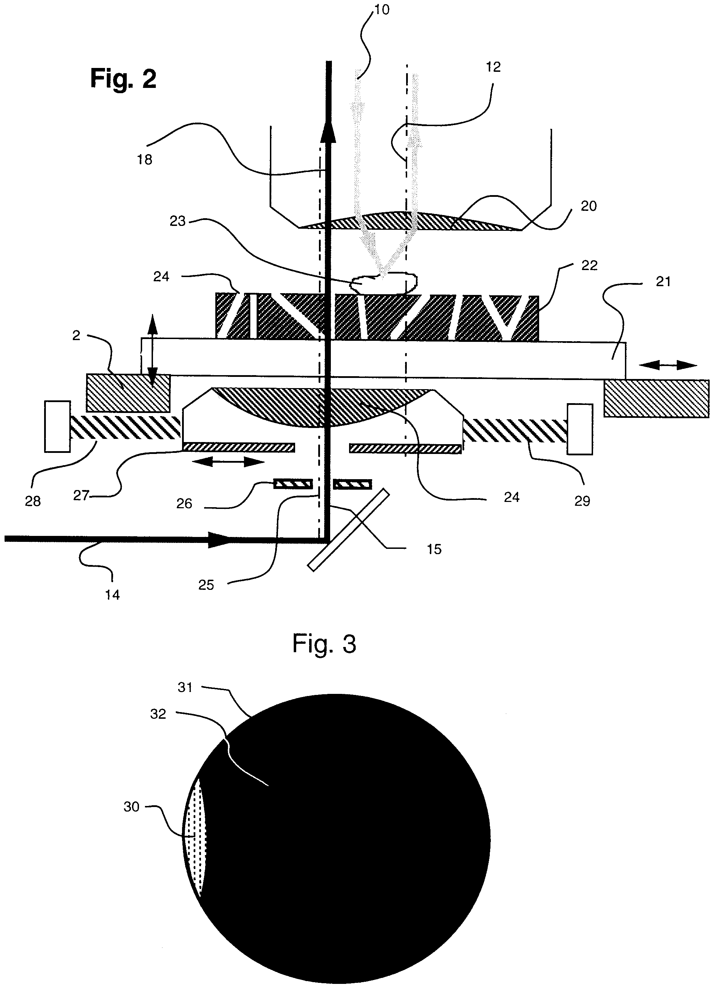

La figure 2 représente une vue détaillée de l'optique du dispositif. L'objectif comporte de façon connue une lentille (20) de collimation. La platine porte-objet supporte une lame de verre transparente (21) sur laquelle est posée la membrane poreuse (22) de faible épaisseur (5 à 10 micromètres) sur laquelle sont fixés les objets marqués (23) à identifier et/ou à analyser.

La membrane (22) est réalisée en tout matériau connu, par exemple du polyester présentant des pores d'une section moyenne de 0,8 microns, ou une membrane poreuse d'une épaisseur moyenne de 8 microns. De telles membranes présentent de ce fait un état de surface contrasté, c'est-à-dire un état de surface présentant des niveaux de luminosité différenciables dans une quelconque partie élémentaire assimilable à un plan.

L'éclairage en transmission s'effectue au moyen d'un ensemble formé par un condenseur (24) et par un diaphragme (26) dont l'axe optique (25) est décalé par rapport à l'axe optique principal (12) du bloc optique (3).

La hauteur du condenseur (24) par rapport à la membrane (22) est réglée de façon à former dans le champ d'observation une image nette du diaphragme (26).

Un deuxième diaphragme (27) sert à limiter les contours de la plage éclairée par transmission.

Des moyens de décentrage (28, 29) permettent d'ajuster la position de la plage éclairée par transmission par rapport à la plage d'observation.

La figure 3 représente un exemple de plage d'observation.

On distingue une première plage (30) représentant environ 5 % de la surface de la plage d'observation. Cette première plage (30) est claire et présente des points sombres correspondant aux pores de la partie de la membrane (22) éclairée par transmission.

Une deuxième plage (31) couvrant l'essentiel de la plage d'observation correspond à la plage éclairée par épi-fluorescence. Elle est noire pour l'essentiel, à l'exception de quelques points brillants (32) correspondant aux produits marqués.

Pour automatiser la focalisation, on procède comme suit :

On calcule, pour une hauteur donnée de la platine (2) par rapport au bloc optique (3), le contraste de la plage claire (30) en déterminant la différence de la valeur des pixels les plus clairs et la valeur des pixels les plus sombres par un traitement informatique du signal électrique délivré par la caméra (6). La valeur de cette différence est mémorisée et constitue une variable Δ₁.

On incrémente ensuite la hauteur de la platine (2) par rapport au bloc optique, et on procède à une nouvelle évaluation du contraste de la plage claire (30), pour déterminer une nouvelle variable Δ₂.

Si cette variable Δ₂ est supérieure à Δ₁, on incrémente à nouveau la hauteur de la platine (22), et on recalcule la valeur Δν, jusqu'à ce que cette variable décroisse. La focalisation dans le plan de la surface de la membrane correspond à la hauteur précédent celle pour laquelle la variable Δ a commencé à décroître.

Si la valeur Δ₂ est inférieure à Δ₁, on décrémente la hauteur jusqu'à ce que la variable Δ commence à croître. Bien entendu, l'Homme de Métier sera à même de déterminer des algorithmes complémentaires pour lisser des éventuels défauts d'éclairage ou d'acquisition des images.

La focalisation peut être réalisée de façon automatique en temps réel, et permet d'explorer un échantillon en continu, la focalisation intervenant après chaque déplacement de la platine (2).

En particulier, lorsque le matériau présente un état de surface adéquat, et notamment une répartition homogène des irrégularités et un niveau de contraste stable, il est possible de contrôler en continu la focalisation. La modification du réglage de la hauteur du bloc optique n'intervient dans ce cas que lorsque la valeur de contraste varie.

L'accumulation de photons est déclenchée dès que la procédure de focalisation est achevée. A titre d'exemple, le tableau ci-après présente la variation des valeurs des pixels les plus clairs et les plus sombres, en fonction de la hauteur de la platine variant par pas de 1 micron. Ce tableau montre en particulier qu'il existe une valeur de contraste maximal unique qui correspond exactement au plan de focalisation.

| Focus | Valeur des pixels les + sombres | Valeur des pixels les + clairs | Contraste Δ |
|---|---|---|---|
| +3 | 60 | 108 | 48 |
| +2 | 60 | 110 | 50 |
| +1 | 60 | 115 | 55 |
| 0 | 55 | 120 | 65 |
| -1 | 60 | 116 | 56 |
| -2 | 60 | 115 | 55 |
| -3 | 60 | 111 | 52 |

L'invention est décrite dans ce qui précède à titre d'exemple non limitatif. Il est bien entendu que l'Homme de Métier sera à même de réaliser différentes variantes sans pour autant sortir du cadre de l'invention. En particulier, il pourra mettre en oeuvre d'autres moyens optiques ou électroniques que ceux décrits à titre d'exemple pour dissocier la zone de focalisation et la zone d'observation.

## Revendications

**1 -** Procédé d'analyse automatique d'éléments en faible concentration sur un support d'objets de faible occurrence présentant un état de surface contrasté, consistant à éclairer la zone d'observation avec une première source de lumière (4) émettant dans une première plage de longueur d'ondes et avec une deuxième source (5) émettant dans le spectre d'excitation des objets (23, 32) de faible occurrence, à procéder à la focalisation des moyens d'acquisition d'images et à déclencher après focalisation l'accumulation de photons émis par les objets (23, 32) de faible occurrence illuminés avec une source (4) émettant dans le spectre d'excitation desdits objets (23, 32), caractérisé en ce que l'on procède à une modification de la focalisation des moyens d'acquisition des images jusqu'à la maximalisation du contraste d'une zone (30) dans ladite première plage de longueur d'ondes, ladite zone (30) étant dissociable de la zone d'observation éclairée par la seconde source de lumière.

**2 -** Procédé d'analyse automatique d'éléments en faible concentration sur un support d'objets (23, 32) de faible occurrence caractérisé en ce que l'on éclaire avec la première source (4) de lumière une zone marginale (30) du champ d'observation, la seconde source de lumière éclairant au moins la zone complémentaire du champ d'observation.

**3 -** Procédé d'analyse automatique d'éléments en faible concentration sur un support d'objets (23, 32) de faible occurrence selon la revendication 2 caractérisé en ce que l'on éclaire avec la première source (4) de lumière dans le spectre visible une zone (30) comprise entre 3 et 8 % de la surface du champ d'observation, en ce que l'on détermine la focalisation en fonction de la maximalisation de l'écart entre la valeur du pixel de plus faible luminosité et la valeur du pixel de plus forte luminosité.

**4 -** Procédé d'analyse automatique d'éléments en faible concentration sur un support d'objets (23, 32) de faible occurrence selon la revendication 1 caractérisé en ce que l'on éclaire le support d'objet alternativement avec la première source (4) de lumière dans le spectre visible et avec la deuxième source de lumière (5), la focalisation étant réalisée de façon synchrone avec le fonctionnement de la première source de lumière (4) par modification de la focalisation des moyens d'acquisition des images jusqu'à la maximalisation du contraste d'une zone (30) éclairée par la lumière visible.

**5 -** Procédé d'analyse automatique d'éléments en faible concentration sur un support d'objets (23, 32) de faible occurrence selon la revendication 1 caractérisé en ce que l'on éclaire le support d'objet avec une première source (4) de lumière dans le spectre visible, émettant dans une première plage de longueur d'onde différente de la deuxième plage de longueur d'onde de fluorescence des objets observés, les moyens d'acquisition d'images comportant des moyens de séparation des deux plages de longueur d'onde, le procédé consistant à procéder à une modification de la focalisation des moyens d'acquisition des images jusqu'à la maximalisation du contraste de l'image correspondant à la première plage de longueur d'onde.

**6 -** Dispositif d'analyse microscopique d'éléments en faible concentration sur un support d'objet présentant un état de surface contrasté, le dispositif comportant une platine (2) sur laquelle est disposée le support (22) portant les objets (23, 32) à analyser, un premier élément d'éclairage comportant une source de lumière (4) dans le spectre visible et des moyens de collimation constitués par un condenseur (24) et un diaphragme (26), un deuxième élément d'éclairage (5) et un moyen d'acquisition d'images (6) délivrant un signal électrique à un circuit de traitement de signal (7) et de visualisation (8) des images observées, le dispositif d'analyse étant caractérisé en ce qu'il comporte des moyens (29) pour la séparation d'une première image correspondant à l'éclairage avec la première source de lumière (4) et d'une deuxième image correspondant à l'éclairage avec la deuxième source de lumière (5) et en ce que le circuit de traitement du signal délivre un signal d'asservissement de la focalisation fonction du contraste de ladite première image dans ladite zone éclairée par le premier moyen d'éclairage (4).

**7 -** Dispositif d'analyse microscopique selon la revendication 6 caractérisé en ce qu'il comporte des moyens (29) pour faire coïncider la zone éclairée par le premier élément d'éclairage (4) avec une zone marginale (30) du champ d'observation, et en ce que le circuit de traitement du signal délivre un signal d'asservissement de la focalisation fonction du contraste de l'image dans ladite zone éclairée par le premier moyen d'éclairage.

**8 -** Dispositif d'analyse microscopique selon la revendication 6 caractérisé en ce qu'il comporte des moyens (29) pour décentrer l'axe optique (25) de l'ensemble d'éclairage par transmission par rapport à l'axe optique principal (12) du bloc optique (3) de façon à former une zone éclairée (30) occupant une partie marginale du champ d'observation.

**9 -** Dispositif d'analyse microscopique d'éléments en faible concentration sur un support d'objet présentant un état de surface contrasté selon la revendication 6 caractérisé en ce qu'il comporte des moyens pour activer alternativement la première source de lumière (4) et la deuxième source de lumière (5) et ce que le circuit de traitement (7) délivre un signal de synchronisation pour l'activation de la focalisation lorsque la première source de lumière (4) est active.

**10 -** Dispositif d'analyse microscopique d'éléments en faible concentration sur un support d'objet présentant un état de surface contrasté selon la revendication 6 caractérisé en ce qu'il comporte un moyen d'acquisition d'image délivrant des signaux chromatiques, la première source de lumière (4) émettant dans une plage de longueur d'onde distincte de la plage de longueur de fluorescence des objets observés, le circuit de traitement (7) générant un premier signal correspondant à l'image dans la plage de longueur d'onde de la première source de lumière, ledit signal constituant le signal d'asservissement de la focalisation fonction du contraste de ladite première image dans ladite zone éclairée par le premier moyen d'éclairage (4), et un deuxième signal correspondant à l'image des objets observés.
